# FASCICULE DE BREVET EUROPEEN

(11) **EP 1 614 265 B1**
(45) Date de publication et mention de la délivrance du brevet: **18.07.2007**
(21) Numéro de dépôt: 04724997.4
(22) Date de dépôt: 01.04.2004
(51) Int. Cl.: H04L 12/64, H04L 12/46

(54) **METHODE DE TRANSMISSION DES MESSAGES DE REINITIALISATION DE BUS IEEE 1394 ET APPAREIL IMPLEMENTANT LA METHODE**
VERFAHREN ZUR ÜBERTRAGUNG DER NACHRICHTEN ZUR IEEE-1394-BUS-RÜCKSETZUNG UND GERÄT ZUR DURCHFÜHRUNG DES VERFAHRENS
METHOD FOR THE TRANSMISSION OF BUS IEEE 1394 REINITIALIZATION MESSAGES AND DEVICE FOR CARRYING OUT SAID METHOD

(30) Priorité: 17.04.2003 FR 0304843
(43) Date de publication de la demande: 11.01.2006
(73) Titulaire: Thomson Licensing, 92100 Boulogne-Billancourt (FR)
(72) Inventeur: BURKLIN, Helmut, F-35000 Rennes (FR); BURDIN, Nicolas, F-35700 Rennes (FR); PERROT, Sébastien, 92 130 ISSY-LES MOULINEAUX (FR)
(74) Mandataire: Le Dantec, Claude
(86) Numéro de dépôt international: PCT/EP2004/003469
(87) Numéro de publication internationale: WO 2004/093392

(56) Documents cités:
- EP-A- 0 961 453
- EP-A- 1 089 497
- EP-A- 1 202 497
- EP-A- 1 246 400
- WO-A-01/42878

## Description

La présente invention est relative au domaine des réseaux de communication, notamment de type domotique et concerne plus particulièrement une méthode de transmission des réinitialisations du bus à travers un pont.

Le bus IEEE 1394 défini dans le document 'IEEE Std 1394-1995 High Performance Bus, 1996-08-30' décrit un bus série pour transmission numérique permettant la connexion d'appareils aussi appelés 'noeuds'. Ce bus possède la propriété de se réinitialiser régulièrement, une réinitialisation se produisant lors du branchement d'un nouveau noeud sur le réseau ou son débranchement et lorsque pour diverses raisons un noeud en prend l'initiative. Ce mode de fonctionnement entraîne de temps à autre des séries de réinitialisations appelées 'tempête de réinitialisations' ('bus reset storm' en anglais). Une phase de réinitialisation se décompose en trois étapes principales, la première consiste à propager un message de réinitialisation proprement dit qui avertit tous les noeuds de la réinitialisation qui intervient. Dans un second temps, un calcul est fait pour ré attribuer une adresse physique unique à chaque noeud, le protocole de base servant à ce calcul est décrit dans l'annexe E, sections 3.1 à 3.3 du standard cité. Il consiste, d'une manière simplifiée, en en parcours d'arbre de type « descendant gauche droit » depuis une racine élue, la numérotation des noeuds se faisant séquentiellement, le père étant numéroté après ses fils. Ce parcours d'arbre se fait par échange de paquets d'auto identification (« self-id » en anglais), l'ensemble des ces paquets d'auto identification constituant ce que nous appelons la 'topologie' du réseau dans la suite du document.
A l'issue de cette phase, chaque noeud du réseau a acquis sa nouvelle adresse. Il reste maintenant à ce que chaque noeud du réseau prenne connaissance de la nouvelle identité de chacun des autres noeuds du réseau, ce qui se fait par une phase de reconnaissance, dans laquelle chaque noeud va interroger tous les autres noeuds du réseau. Cette phase de reconnaissance impliquant une interrogation de tous les noeuds du réseau par tous les noeuds, est donc lente et génératrice de trafic sur le bus.
Dans un souci d'amélioration de la charge du réseau, il est connu d'utiliser une méthode 'intelligente' améliorant cette phase de reconnaissance des noeuds du réseau. Une telle méthode est par exemple décrite dans la demande de brevet EP 0 961 453 publié le 01 décembre 1999. La méthode décrite consiste en un procédé d'identification de noeuds dans un réseau de communication, chaque noeud étant muni d'au moins un port de connexion au réseau, caractérisé en ce qu'il comporte les étapes de:
- attribution selon un procédé donné d'une première adresse unique à chaque noeud du réseau,
- attribution d'une seconde adresse unique à chaque noeud du réseau après une réinitialisation dudit réseau,
- suite à une réinitialisation, établissement d'une table de correspondance comportant la relation entre la première et la seconde adresse d'un noeud.

Il est, par ailleurs, possible de connecter plusieurs bus par des ponts transparents comme par exemple des ponts de communication sans fils comme dévoilé dans la demande de brevet EP 1 246 400 publiée le 02 octobre 2002. La notion de transparence s'entendant par le fait que les noeuds du réseau voient un unique réseau virtuel composé de tous les bus interconnectés par le pont. Le pont peut être composé, par exemple par un réseau sans fil implémentant la norme 802.11 ou la norme Hiperlan2, mais il peut aussi être constitué par tout autre type de réseau imaginable. Pour maintenir la cohérence de ce réseau virtuel entre les différents bus interconnectés, il va falloir transmettre les messages de réinitialisation, qui interviennent sur l'un des bus, aux autres bus interconnectés, ainsi que les paquets d'auto identification associés. Sans cette transmission, il serait impossible de maintenir la topologie du réseau virtuel unique sur tous les bus. La phase de construction de la topologie du réseau est suivie, selon la norme, d'une phase de reconnaissance où chaque noeud du réseau cherche à établir la correspondance entre l'EUID64 du noeud et l'identifiant physique lui ayant été attribué. Dans la suite du document, nous appellerons donc 'bus', un bus physique 1394 contenant une tête de pont, 'pont' l'autre réseau connectant les têtes de pont et permettant l'interconnexion des bus et 'réseau' le bus virtuel unique constitué par les bus interconnectés par le pont. La 'tête de pont' est le noeud d'un bus qui contient les deux interfaces permettant de connecter le bus et le pont.

Dans ce cas, la réinitialisation du bus ainsi que le trafic généré par la phase de reconnaissance induite se transmet via l'autre réseau formant le pont entre les différents bus. Lorsqu'une tête de pont voit une réinitialisation sur son bus local elle transmet cette réinitialisation, la topologie associée (l'ensemble des paquets d'auto identification de la norme) aux autres têtes de pont, ses pairs, auxquels elle est connectée par l'autre réseau. Ces têtes de pont génèrent alors une réinitialisation sur le bus auquel ils sont connectés. Il s'ensuit la phase de reconnaissance, fortement génératrice de trafic sur le pont. D'autre part la retransmission de ce message de réinitialisation ne va pas se faire immédiatement, il se peut donc qu'une autre réinitialisation soit observée sur le bus local avant la transmission du message indiquant la première réinitialisation. Ceci est particulièrement vrai lorsque se produit une tempête de réinitialisation comme mentionné plus haut. C'est-à-dire lorsqu'une série de réinitialisation se produit.

Cela conduit, d'une part, à stocker tous ces messages en attente de transmission avec les informations de topologie associées sur la tête de pont. D'autre part la transmission de tous ces messages provoque une charge non négligeable sur le pont.

Le document EP1202497 décrit une méthode de transmission de réinitialisation d'un bus au travers d'un pont transparent à travers d'autres bus.

L'invention a donc pour but de limiter le nombre de messages de réinitialisation transmis par la tête de pont aux autres bus, sans toutefois compromettre l'intégrité topologique du réseau, notamment lors de l'utilisation d'une méthode intelligente limitant la phase de reconnaissance consécutive à la reconstruction de la topologie du réseau.

L'invention concerne une méthode de transmission des messages de réinitialisation d'un bus IEEE 1394 et des informations de topologie associée, au travers d'un pont transparent, une tête de pont connectée d'une part au bus 1394 et au réseau assurant ledit pont transparent, caractérisée par le fait que, lors d'une série de messages de réinitialisation, ladite tête de pont sélectionne les messages de réinitialisation intermédiaires qu'elle transmet aux autres bus auxquels elle est connectée.

Bien que présentée dans le cadre des bus IEEE 1394, il est clair que l'invention peut être appliquée à tout type de bus, dans la mesure où celui-ci possède la caractéristique de se réinitialiser et de recalculer sa topologie d'une manière comparable.

Selon un premier mode de réalisation particulier, on retient, à chaque réinitialisation reçue par une tête de pont, le nombre d'appareil connecté au bus. On regarde ensuite si ce nombre augmente ou diminue et on ne transmet la réinitialisation que dans le cas où ce nombre se mettrait à augmenter après avoir diminué ou, au contraire, se mettrait à diminuer après avoir augmenté.

Selon un second mode de réalisation particulier, la tête de pont mémorise la topologie initiale du réseau. Ensuite, quand elle reçoit un message de réinitialisation, elle calcule, d'une manière connue, un ensemble de tables de correspondance faisant le lien entre les adresses des noeuds avant et après la réinitialisation. Ces tables sont obtenues par une méthode dite 'intelligente' appliquée à la topologie du réseau avant la réinitialisation et à la nouvelle topologie résultant de la réinitialisation. Puis la même méthode est appliquée à la topologie initiale et à la nouvelle topologie. La comparaison des deux résultats permet de savoir si les réinitialisations intermédiaires peuvent être écartées sans compromettre ce calcul de tables de correspondance ou pas. Dans le cas où ce calcul n'est pas compromis par l'omission de la réinitialisation intermédiaire, celle-ci est omise, on ne la transmet pas aux autres bus.

Selon un troisième mode de réalisation particulier de l'invention, lorsqu'une tempête de réinitialisation se déclenche, on ne transmet que deux réinitialisations. La première simulera la déconnexion du bus entier connecté à la tête de pont et responsable de la tempête de réinitialisation. La seconde, une fois le bus en question dans un état stable, simulera la reconnexion de ce bus et la transmission de sa topologie stabilisée.

L'invention fonctionne quel que soit le nombre de bus IEEE 1394 connectés par un pont, car la méthode décrite est implémentée sur la tête de pont du bus responsable de la tempête de réinitialisation et est transparente pour les autres bus.

L'invention a également pour objet une tête de pont destinée à relier un bus IEEE 1394 et un autre réseau formant un pont implémentant une méthode de transmission sélective des messages de réinitialisation provenant du bus IEEE 1394.

D'autres caractéristiques et avantages de la présente invention ressortiront de la description de l'exemple de réalisation qui va suivre, pris à titre d'exemple non limitatif, en référence aux figures annexées dans lesquelles :
- La figure 1 est un schéma d'un réseau où plusieurs bus IEEE 1394 sont interconnectées par l'intermédiaire d'un pont transparent.
- La figure 2 représente schématiquement les moyens mis en oeuvre dans un équipement servant de tête de pont entre un bus IEEE 1394 et un autre réseau.
- La figure 3 représente, sous forme d'organigramme, le premier mode de réalisation de l'invention.
- La figure 4 représente, sous forme d'organigramme, le second mode de réalisation de l'invention.
- La figure 5 représente, sous forme d'organigramme, le troisième mode de réalisation de l'invention.

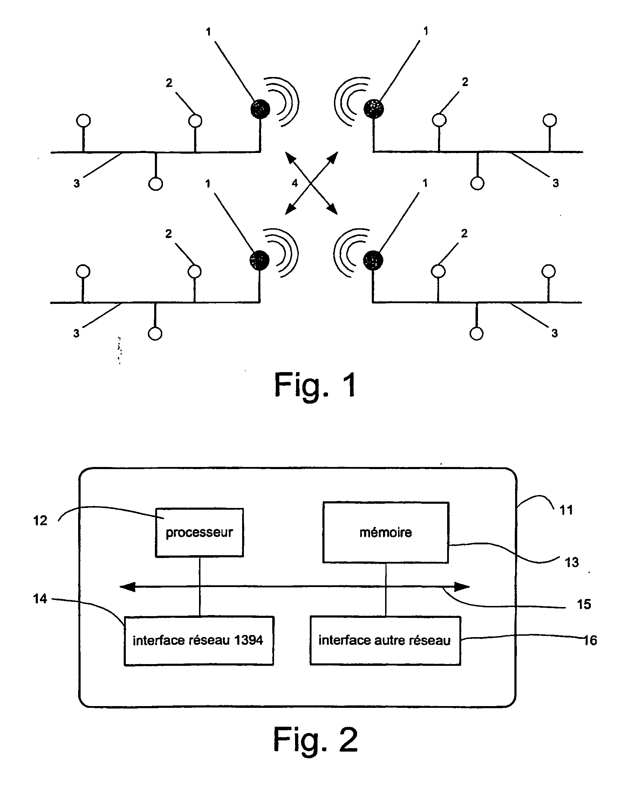

La figure 1 représente un réseau composé de plusieurs bus 1394 interconnectées par un autre réseau quelconque (4). Ce réseau quelconque peut être un réseau sans fil, comme par exemple un réseau 802.11 ou hiperlan 2, mais il peut aussi être basé sur toute autre technologie. Chaque bus se compose d'un lien 1394 (3) connectant des appareils, appelés noeuds (2). Chaque bus contient une tête de pont (1) connecté d'une part sur le bus 1394 et d'autre part à l'autre réseau (4). Pour les appareils 1394 connectés sur un bus, l'autre réseau peut être transparent, c'est-à-dire que pour ces appareils tout se passe comme si tous les noeuds de chacun des bus étaient connectés sur le même réseau physique 1394. Les informations de topologies stockées sur chaque noeud concernent tout le réseau dans son ensemble, il n'est pas nécessaire que des informations relatives à cet autre réseau connectant les bus se trouvent sur les noeuds du réseau 1394.

La figure 2 représente l'architecture générale d'une tête de pont (11). Elle consiste en une mémoire (13) contenant les programmes implémentant, entre autre, les méthodes décrites dans cette invention, ainsi que les piles de protocoles gérant d'une part la connexion au réseau 1394 et l'autre réseau. Cette mémoire (13) est connectée à un processeur (12) capable d'exécuter ces programmes par un bus (15) Sont d'autre part connectées à ce bus les interfaces réseau physique, 1394 (14) d'une part et correspondant à l'autre réseau (16) d'autre part.

Lorsque l'on se pose le problème de réduire le nombre de messages de réinitialisation que l'on doit transmettre aux autres bus du réseau, tel que décrit dans la figure 1, on imagine tout de suite ne transmettre que le dernier message d'une série de messages se produisant en un intervalle de temps court. A condition de transmettre les informations de topologie correspondantes, cette méthode simple fonctionne correctement dans le cas où les noeuds implémenteraient la méthode standard décrite dans la norme pour le calcul de la topologie décrit annexe E paragraphe 3.2 de la norme citée.
Mais dans le cas de noeuds implémentant une méthode de calcul de topologie intelligent tel que celle décrite dans la demande de brevet EP 0 961 453, une simple application de cette méthode conduit à un calcul erroné de la topologie par les noeuds situés sur les autres bus du réseau. En effet cette méthode est basée sur le fait qu'un noeud connecté sur un port donné, suite à une réinitialisation du réseau, soit reste le même, soit disparaît, soit apparaît. La possibilité qu'il puisse être remplacé par un autre noeud n'est pas prise en compte du fait qu'elle ne peut arriver dans le cas où l'on traiterait toutes les réinitialisations du réseau. Mais si on se permet d'omettre des réinitialisations, il peut arriver qu'un noeud soit remplacé par un autre et ce remplacement ne sera pas pris en compte, conduisant à une vision erronée de la topologie du réseau.

Les trois exemples de réalisations de l'invention, qui vont être décrits ci-après plus en détails, résolvent ce problème et fonctionnent correctement que les noeuds effectuent une reconnaissance des noeuds après réinitialisation selon la méthode standard décrite dans la norme ou selon la méthode intelligente décrite dans le brevet précité. Ces trois exemples doivent également s'adapter à nombre d'autres solutions que la méthode intelligente décrite.

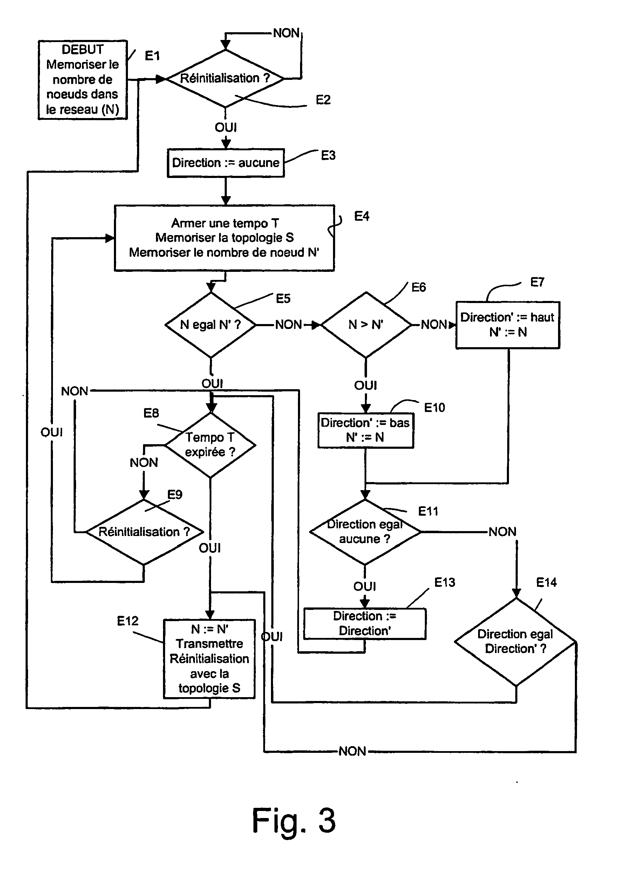

La figure 3 décrit un premier mode de réalisation de l'invention compatible avec ladite méthode intelligente. Dans ce mode de réalisation l'on commence par mémoriser le nombre N de noeuds dans le bus connecté à la tête de pont (E1). Un indicateur de direction de l'évolution du nombre de noeuds dans le réseau va permettre de mémoriser le fait que le nombre de noeuds du réseau augmente ou diminue.
Ensuite on attend l'arrivée d'un message de réinitialisation (E2).
Quand on reçoit un premier message de réinitialisation, on marque l'indicateur de direction à « aucune » (E3).
Puis une temporisation est armée pour une durée paramétrable T, cette temporisation permettant de déterminer ce qui est considéré comme une tempête de messages d'initialisation.
La valeur de T est typiquement de l'ordre de la milliseconde, ce qui représente 8 cycles 1394. Il est à noter que si la valeur du paramètre T de temporisation est choisie trop longue, les performances du réseau vont être pénalisées car les autres bus vont devoir attendre au moins ce temps pour voir transmise une réinitialisation venant de ce bus. D'un autre côté, si T est choisi trop court, on risque de transmettre trop de réinitialisations lors d'une tempête de réinitialisation. Ce paramètre devra donc être ajusté en conséquence, ce qui ne pose pas de problème particulier pour l'homme du métier.
Une alternative consiste à attendre que le lien soit libre pour la transmission du message de réinitialisation ou que le message de réinitialisation précédent ait été acquitté par la tête de pont destinataire du message, ou les têtes de pont destinataires du message.
La topologie du bus, communiquée à l'occasion de cette réinitialisation, appelé S, c'est l'ensemble des paquets d'auto identification transmis à l'occasion de cette réinitialisation comme décrit dans la norme citée,. Le nouveau nombre de noeuds du bus N' (E4) est également mémorisée.

Là, se pose la question de savoir si le nombre de noeuds dans le bus à changé (E5).
Si ce nombre n'a pas changé, on regarde si la temporisation a expiré (E8).
Si c'est le cas, on modifie le nombre de noeuds du bus en l'affectant avec la nouvelle valeur N', puis on transmet le message de réinitialisation ainsi que la nouvelle topologie (E12), et on se remet en attente d'un nouveau message de réinitialisation (E2).
Dans le cas où la temporisation n'a pas expiré, on attend qu'elle expire ou qu'un nouveau message de réinitialisation arrive (E9). Si elle expire avant l'arrivée d'un nouveau message de réinitialisation, le message et la topologie associée (E12) sont transmis comme précédemment.
Dans le cas où un nouveau message de réinitialisation arriverait avant la fin de la temporisation, il est traité comme le message précédent (E4).
Revenons, maintenant à ce qui ce passe dans le cas où le nombre de noeuds dans le bus aurait changé (E6). On se pose la question de savoir si ce nombre augmente ou diminue en positionnant un nouvel indice de direction, Direction', à « haut » dans le cas où il augmenterait et à « bas » dans le cas où il diminuerait (E7, E10).
Puis on se pose la question de savoir si l'indice de direction précédemment mémorisé était à « aucune » et dans ce cas on retourne à l'attente de la temporisation (E8).
Si cet indice de direction précédent était déjà positionné, on regarde s'il est le même que le nouvel indice Direction', s'il est le même on retourne encore à l'attende de la temporisation (E8), sinon on transmet cette réinitialisation et la topologie associée aux autres bus à travers le pont (E12).
Comme on peut le voir cette méthode conduit à ne transmettre que des messages de réinitialisation à une fréquence T, plus les messages signalant des changements de direction dans l'évolution du nombre de noeuds dans le bus 1394 connectée à la tête de pont.

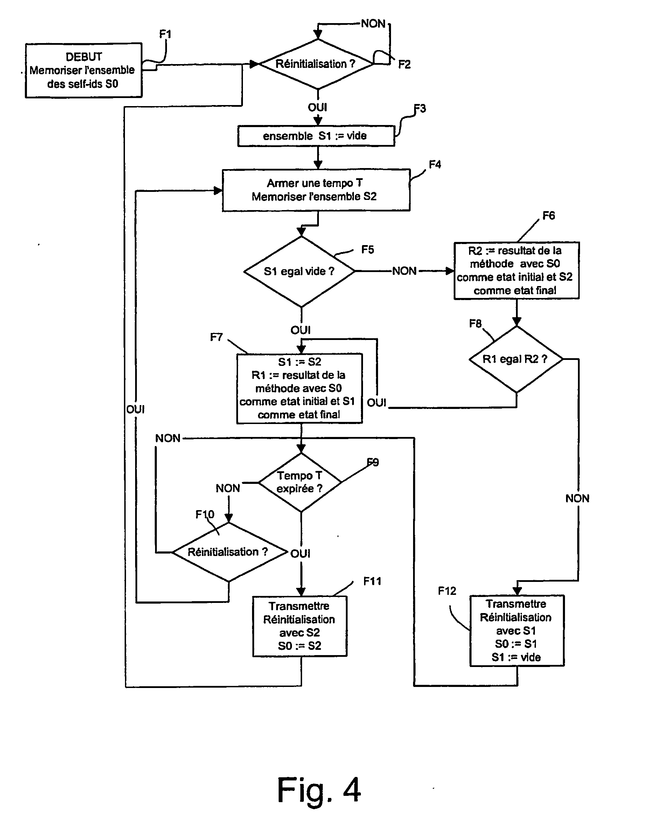

Dans un second mode particulier de réalisation, qui est le mode préférentiel, illustré par la figure 4, on utilise ladite méthode intelligente.
On commence par enregistrer une topologie initiale du bus connecté à la tête de pont, appelée S0 (F1).
Puis on se met en attente d'un message de réinitialisation (F2).
Lors de l'arrivée d'un message de réinitialisation, on initialise une topologie de bus S1 à « vide » (F3)
Ensuite on arme une temporisation avec un paramètre de temps T, et on mémorise la topologie transmise à l'occasion de cette réinitialisation que l'on appelle S2 (F4).
Dans le cas où S1 est vide, donc que la topologie précédant le message de réinitialisation traité est la topologie initiale, on enregistre la nouvelle topologie S2 comme topologie précédente S1. Puis on calcule le nouveau contenu des tables de correspondance entre les adresses attribuées aux noeuds lors de la réinitialisation du bus selon la méthode décrite dans le document EP 0 961 453, précédemment cité. On appelle R1 le résultat de ladite méthode intelligente appliqué à S0 comme état de départ et S1 comme état final. Ce résultat se compose de trois tables, la première donnant la correspondance entre les adresses attribués aux noeuds, toujours présents dans le réseau, avant et après la réinitialisation, la seconde donnant les adresses des noeuds ayant disparus du réseau et la troisième les adresses des noeuds ayant apparus dans le réseau. R1 est donc l'ensemble de ces trois tables.
Puis on regarde si la temporisation a expiré (F9), si c'est le cas on transmet le message de réinitialisation avec les informations de topologie S2 et on affecte la topologie S0 initiale avec la valeur de S2 (F11). Sinon on attend la fin de cette temporisation ou l'arrivée d'un nouveau message-d'initialisation (F10) auquel cas on revient traiter ce nouveau message par un retour à l'étape F4.
A l'étape F5, dans le cas où la topologie précédent S1 n'était pas vide, on calcule le résultat R2 de l'application de ladite méthode intelligente en prenant S0 comme état initial et S2 comme état final (F6) et on compare ce résultat R2 avec celui obtenu en prenant S0 comme état initial et S1 comme état final que l'on avait mémorisé dans R1(F8). La comparaison consiste donc à comparer le contenu des trois tables obtenues dans les deux cas. Dans le cas où ces deux résultats sont identiques, on en déduit que la topologie intermédiaire S1 peut ne pas être transmise sans compromettre l'intégrité de la topologie du réseau telle qu'elle sera vue sur les différents bus. On repasse donc à l'étape F7 en oubliant la topologie intermédiaire. Dans le cas contraire, on est obligé de transmettre cette topologie intermédiaire S1 avant de réinitialiser la topologie initiale avec cette nouvelle valeur S1 et de revenir en début de processus à l'étape F2 en attente d'un nouveau message de réinitialisation (F12).

On voit donc, que dans cet exemple de réalisation, S0 représente toujours la topologie telle qu'elle est vue par les autres bus. Tandis que S1 représente une nouvelle topologie intermédiaire calculée sur le bus provoquant la réinitialisation, tandis qu'à l'arrivée d'une nouvelle réinitialisation S2 représente la nouvelle topologie permettant de comparer le résultat de notre méthode intelligente en prenant en compte la topologie intermédiaire S1 et en l'omettant.

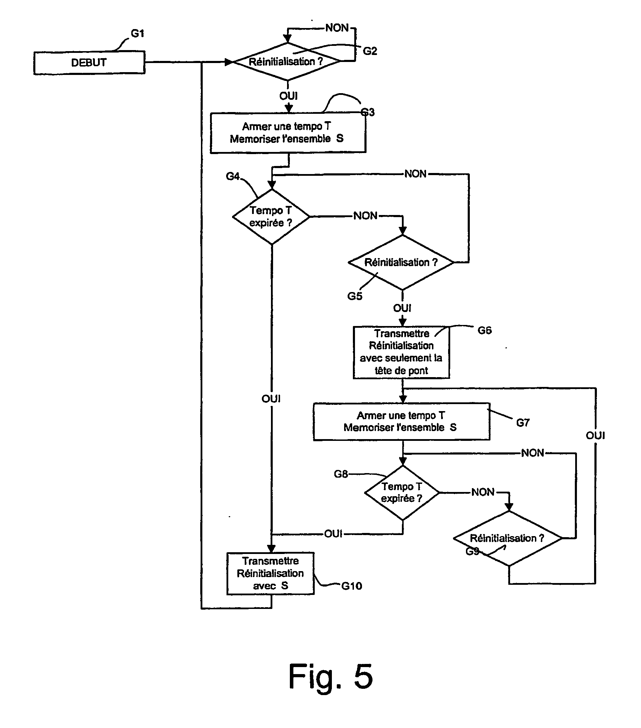

Dans un troisième mode de réalisation de l'invention, illustré par la figure 5, on va décrire une méthode permettant de limiter à deux le nombre de message de réinitialisation survenant lors d'une tempête de réinitialisation.
Pour ce faire, on commence par se mettre en attente d'un premier message de réinitialisation (G2).
Lorsque ce premier message arrive, on arme une temporisation T et on mémorise la topologie transmise S (G3).
On regarde alors si la temporisation a expiré (G4), et dans ce cas on transmet la réinitialisation accompagnée de la topologie S (G10).
Si cette temporisation n'a pas expiré, on se met à attendre son expiration ou l'arrivée d'une nouvelle réinitialisation (G5).
Dans le cas où cette nouvelle réinitialisation survient, on la transmet avec une topologie calculée pour ne signaler que la présence de la tête de pont (G6), puis on réinitialise la temporisation T et on mémorise de nouveau la topologie S reçue avec la réinitialisation (G7).
On se met alors de nouveau dans une phase d'attente de l'expiration de la temporisation ou de l'arrivée d'une nouvelle réinitialisation (G8, G9).
Cette arrivée d'une nouvelle réinitialisation, avant l'expiration de la temporisation provoque la réinitialisation de la temporisation et la mémorisation de la dernière topologie transmise avec cette réinitialisation (G7).
Quand la temporisation vient à expirer sans réinitialisation, on transmet la dernière topologie transmise (G10).

On voit donc que cette méthode revient à simuler, pour les autres bus, la déconnexion de tout le bus provoquant les réinitialisation derrière la tête de pont, puis la re-connexion de ce bus, stabilisée, après cette tempête.

Les informations complémentaires sur les normes citées peuvent être trouvées dans les documents suivants :
- IEEE Std 1394-1995 High Performance Serial Bus
- IEEE P1212 Draft 1.2, Control and Status Registers (CSR) Architecture for microcomputer buses

## Revendications

1. Méthode de transmission des messages de réinitialisation d'un bus (3) et des informations de topologie associée, au travers d'un pont transparent (4), à un ou plusieurs autres bus, connectés au premier bus par ledit pont, ladite méthode s'exécutant sur une tête de pont (1), connectée d'une part au bus et d'autre part au pont transparent (4), **caractérisée par le fait que**, lors d'une série de messages de réinitialisation, ladite tête de pont (1) sélectionne les messages de réinitialisation qu'elle transmet aux autres bus interconnectés par ledit pont;
et en ce que ne sont transmis que les messages de réinitialisation provoqués par un changement dans le sens d'évolution du nombre de noeuds dans le réseau formé dudit bus ou desdits un ou plusieurs autres bus.

2. Méthode selon la revendication 1, **caractérisée en ce qu'**elle comporte les étapes de :
- mémorisation du nombre de noeuds (2) du bus connecté à la tête de pont (1) et mise à zéro d'un indice d'évolution du nombre de noeuds connectés sur ledit bus (E1).
- sur réception d'un message de réinitialisation (E2), comparaison du nouveau nombre de noeuds connectés sur ledit bus (D1),
- si le nombre de noeuds ne change pas, on ne transmet pas le message de réinitialisation (E3),
- si le nombre de noeuds augmente alors qu'il était stable (D2) ou augmentait déjà on ne transmet pas le message de réinitialisation (E4, E3),
- si le nombre de noeuds diminue alors qu'il était stable ou diminuait déjà (D3) on ne transmet pas le message de réinitialisation (E5, E3),
- dans les autres cas on transmet le message de réinitialisation (E6), puis on revient à la première étape (E1).

3. Méthode selon la revendication 1, les noeuds du réseau utilisant une méthode donnée pour la phase de reconnaissance du réseau postérieure à la réinitialisation, **caractérisée par le fait que**, la décision de transmettre la réinitialisation, du bus qui en est à l'origine aux autres bus connectés par le pont, est prise en fonction du résultat de l'application de ladite méthode à la topologie transmise avec ladite réinitialisation.

4. Méthode selon la revendication 3, **caractérisée en ce qu'**elle comporte les étapes de :
- Mémorisation de la topologie initiale du bus connecté ;
- lors de la réception d'un message de réinitialisation, mémorisation de la topologie associée sans transmission dudit message de réinitialisation ;
- calcul et mémorisation du résultat d'une méthode intelligente appliquée à la topologie initiale et à la nouvelle topologie intermédiaire reçue ;
- lors de la réception d'un nouveau message de réinitialisation, calcul et mémorisation du résultat de ladite méthode intelligente appliqué à la topologie initiale et à la nouvelle topologie reçue ;
- comparaison des résultats donnés par ladite méthode intelligente sur la topologie intermédiaire et la dernière reçue ;
- transmission du message de réinitialisation et de la topologie intermédiaire en cas de résultats différent ;
- si les résultats sont identiques, la dernière topologie devient la topologie intermédiaire ;
- une temporisation assurant la transmission de la dernière topologie reçue après un temps donné.

5. Méthode selon la revendication 1, **caractérisée en ce qu'**elle simule la déconnexion du bus entier générant la réinitialisation à l'exception de la tête de pont.

6. Méthode selon la revendication 5, **caractérisée en ce qu'**elle comporte les étapes de :
- lors de la réception d'un premier message de réinitialisation, transmission de ce message de réinitialisation accompagnée d'informations de topologie simulant la déconnexion du bus derrière ladite tête de pont ;
- on ignore ensuite tous les messages de réinitialisations, sauf la dernière, qui surviennent dans un temps donné, cette temporisation étant réinitialisée à chaque réception d'un nouveau message de réinitialisation ;
- transmission de ce dernier message de réinitialisation et des informations de topologie associées.

7. Méthode selon l'une des revendications précédentes où les bus sont dès bus IEEE 1394.

8. Appareil comportant une interface réseau connectée à un bus et une interface réseau connectée sur un réseau comprenant un ou plusieurs autres bus, équipé de moyens de transmission des messages de réinitialisation du bus (3) et des informations de topologie associée auxdits un ou plusieurs autres bus, **caractérisé par le fait que** ledit appareil comprend des moyens de sélections qui, lors d'une série de messages de réinitialisation, sélectionnent les messages de réinitialisation que ledit appareil transmet auxdits un ou plusieurs autres bus et en ce que ne sont transmis que les messages de réinitialisation provoqués par un changement dans le sens d'évolution du nombre de noeuds dudit bus ou desdits un ou plusieurs autres bus.

9. Appareil selon la revendication 8 où le bus est un bus IEEE 1394.

10. Appareil selon d'une quelconque des revendications 8 et 9, **caractérisé en ce qu'**il comprend des moyens de simulation de la déconnexion du bus entier générant la réinitialisation à l'exception de la tête de pont.

## Claims

1. Method of transmitting messages for resetting a bus (3) and associated topology information, across a transparent bridge (4), to one or several other buses, connected to the first bus by the said bridge, connected on the one hand to the bus and on the other hand to the said transparent bridge (4), **characterized in that**, during a series of reset messages, the said bridge head (1) selects the intermediate reset messages that it transmits to the other buses interconnected on the said bridge;
and **in that** only the intermediate reset messages caused by an alteration in the direction of change of the number of nodes in the network made of said one or several buses are transmitted.

2. Method according to Claim 1, **characterized in that** it comprises the steps of:
- storing the number of nodes (2) of the bus connected to the bridge head (1) and setting to zero an index of change of the number of nodes connected to the said bus (E1),
- on receipt of a reset message (E2), comparing the new number of nodes connected to the said bus (D1),
- if the number of nodes does not alter, the reset message is not transmitted (E3),
- if the number of nodes is increasing whereas it was stable (E2) or was already increasing, the intermediate reset message is not transmitted (E4, E3),
- if the number of nodes is decreasing whereas it was stable or was already decreasing (D3), the intermediate reset message is not transmitted (E5, E3),
- in other cases, the reset message is transmitted (E6), then we return to the first step (E1).

3. Method according to Claim 1, the nodes of the network using a given method for the phase of recognition of the network after reset, **characterized in that**, the decision to transmit the reset, from the bus from which it originates to the other buses connected by the bridge, is taken as a function of the result of the application of the said method to the topology transmitted with the said reset.

4. Method according to Claim 3, **characterized in that** it comprises the steps of:
- storing the initial topology of the bus connected;
- on receipt of a message of reset of storing of the associated topology without transmitting the said message of reset;
- calculating and storing the result of an intelligent method applied to the initial topology and to the new intermediate topology received;
- on receipt of a new message of reset, calculating and storing the result of the said intelligent method applied to the initial topology and to the new topology received;
- comparing the results given by the said intelligent method on the intermediate topology and the last one received;
- transmitting of the message of reset and the intermediate topology in the case of different results;
- if the results are identical, the last topology becomes the intermediate topology;
- a timeout ensuring the transmission of the last topology received after a given time.

5. Method according to Claim 1, **characterized in that** it simulates the disconnecting of the entire bus generating the reset with the exception of the bridge head.

6. Method according to Claim 5, **characterized in that** it comprises the steps of:
- on receipt of a first message of reset, transmitting this message of reset accompanied by topology information simulating the disconnecting of the bus behind the said bridge head;
- thereafter, all the messages of reset, except the last one, which arise in a given time are ignored, this timeout being reset with each receipt of a new reset message;
- transmitting this last message of reset and associated topology information.

7. Method according to one of the preceding claims where the buses are IEEE 1394 buses.

8. Device comprising a network interface connected to a bus and a network interface connected to another network, equipped with means of transmission of reset messages of the bus (3) and information topology associated to said one or several other buses, **characterized in that** said device comprises means of selections, that, during a series of reset messages selects the intermediate reset message that said device transmits to the other buses interconnected on the said bridge;
and **in that** only the intermediate reset messages caused by an alteration in the direction of change of the number of nodes in the network made of said one or several buses are transmitted.

9. Device according to Claim 8 where the bus is an IEEE 1394 bus.

10. Device according to any of Claims 8 and 9, **characterized in that** it comprises means of simulation of deconnection of entire bus generating the reset, except the bridge head.

## Patentansprüche

1. Verfahren zur Übertragung der Meldungen zur Rücksetzung eines Busses (3) und der zugehörigen Topologieinformationen über eine transparente Brücke (4) zu einem weiteren oder mehreren weiteren, über die Brücke an den ersten Bus angeschlossenen Bussen, wobei das Verfahren an einem Brückenkopf (1) durchgeführt wird, der zum einen an den Bus und zum anderen an die transparente Brücke (4) angeschlossen ist, **dadurch gekennzeichnet, dass** bei einer Serie von Rücksetzungsmeldungen der Brückenkopf (1) die Rücksetzungsmeldungen auswählt, die er zu den weiteren durch die Brücke miteinander verbundenen Bussen überträgt, und dass lediglich die Rücksetzungsmeldungen übertragen werden, die durch eine Änderung in der Richtung der Entwicklung der Anzahl von Knoten in dem durch den Bus oder den einen weiteren Bus bzw. die mehreren weiteren Busse gebildeten Netzwerk hervorgerufen werden.

2. Verfahren nach Anspruch 1, **dadurch gekennzeichnet, dass** es die folgenden Schritte umfasst:
- Speicherung der Anzahl von Knoten (2) des an den Brückenkopf (1) angeschlossenen Busses und Rücksetzung auf Null eines Indexes zur Entwicklung der Anzahl von auf dem Bus angeschlossenen Knoten (E1),
- Vergleich der neuen Anzahl von auf dem Bus angeschlossenen Knoten (D1) bei Empfang einer Rücksetzungsmeldung (E2),
- wenn die Knotenanzahl sich nicht verändert, wird die Rücksetzungsmeldung nicht übertragen (E3),
- wenn die Knotenanzahl steigt, obwohl sie stabil war (D2) oder bereits stieg, wird die Rücksetzungsmeldung nicht übertragen (E4, E3),
- wenn die Knotenanzahl sinkt, obwohl sie stabil war oder bereits sank (D3), wird die Rücksetzungsmeldung nicht übertragen (E5, E3),
- in den anderen Fällen wird die Rücksetzungsmeldung übertragen (E6) mit anschließender Rückkehr zum ersten Schritt (E1).

3. Verfahren nach Anspruch 1, wobei die Netzwerkknoten für die Phase der Erkennung des Netzwerks nach der Rücksetzung ein vorgegebenes Verfahren anwenden, **dadurch gekennzeichnet, dass** die Entscheidung, die Rücksetzung von dem Bus, von dem sie ausgeht, zu den weiteren, durch die Brücke verbundenen Bussen zu übertragen, in Abhängigkeit von dem Ergebnis der Anwendung des Verfahrens auf die mit der Rücksetzung übertragene Topologie getroffen wird.

4. Verfahren nach Anspruch 3, **dadurch gekennzeichnet, dass** es die folgenden Schritte umfasst:
- Speicherung der ursprünglichen Topologie des angeschlossenen Busses,
- bei Empfang einer Rücksetzungsmeldung Speicherung der zugehörigen Topologie ohne Übertragung der Rücksetzungsmeldung,
- Berechnung und Speicherung des Ergebnisses eines intelligenten, auf die ursprüngliche Topologie und auf die neue erhaltene Zwischentopologie angewendeten Verfahrens,
- bei Empfang einer neuen Rücksetzungsmeldung Berechnung und Speicherung des Ergebnisses des intelligenten, auf die ursprüngliche Topologie und auf die neue erhaltene Topologie angewendeten Verfahrens,
- Vergleich der durch das intelligente Verfahren an der Zwischentopologie und an der Letzterhaltenen gelieferten Ergebnisse,
- Übertragung der Rücksetzungsmeldung und der Zwischentopologie im Falle von unterschiedlichen Ergebnissen,
- bei identischen Ergebnissen wird die letzte Topologie zur Zwischentopologie,
- eine Verzögerung zur Sicherstellung der Übertragung der letzterhaltenen Topologie nach einer vorgegebenen Zeit.

5. Verfahren nach Anspruch 1, **dadurch gekennzeichnet, dass** es die Trennung des gesamten, die Rücksetzung erzeugenden Busses mit Ausnahme des Brückenkopfes simuliert.

6. Verfahren nach Anspruch 5, **dadurch gekennzeichnet, dass** es die folgenden Schritte umfasst :
- bei Empfang einer ersten Rücksetzungsmeldung Übertragung dieser Rücksetzungsmeldung mit die Trennung des Busses hinter dem Brückenkopf simulierenden Topologieinformationen;
- es werden anschließend alle Rücksetzungsmeldungen außer der letzten außer Acht gelassen, die in einer vorgegebenen Zeit auftreten, wobei diese Verzögerung bei jedem Empfang einer neuen Rücksetzungsmeldung zurückgesetzt wird;
- Übertragung dieser letzten Rücksetzungsmeldung und der zugehörigen Topologieinformationen.

7. Verfahren nach einem der vorhergehenden Ansprüche, bei dem es sich bei den Bussen um IEEE-1394-Busse handelt.

8. Gerät mit einer Netzwerkschnittstelle, die an einen Bus und an eine Netzwerkschnittstelle angeschlossen ist, die auf einem einen weiteren Bus bzw. mehrere weitere Busse aufweisenden Netzwerk angeschlossen ist, welches Gerät mit Mitteln zur Übertragung der Meldungen zur Rücksetzung des Busses (3) und der dem einen weiteren Bus bzw. den mehreren weiteren Bussen zugeordneten Topologieinformationen ausgestattet ist, **dadurch gekennzeichnet, dass** das Gerät Auswahlmittel umfasst, die bei einer Serie von Rücksetzungsmeldungen die Rücksetzungsmeldungen auswählen, die das Gerät zu dem einen weiteren Bus bzw. den mehreren weiteren Bussen überträgt, und dass lediglich die Rücksetzungsmeldungen übertragen werden, die durch eine Änderung in der Richtung der Entwicklung der Anzahl von Knoten des einen Busses oder des einen weiteren Busses bzw. der mehreren weiteren Busse hervorgerufen werden.

9. Gerät nach Anspruch 8, bei dem es sich bei den Bussen um IEEE-1394-Busse handelt.

10. Gerät nach einem der Ansprüche 8 und 9, **dadurch gekennzeichnet, dass** es Mittel zur Simulation der Trennung des gesamten, die Rücksetzung erzeugenden Busses mit Ausnahme des Brückenkopfes umfasst.
